# Europäisches Patentamt

## European Patent Office

## Office européen des brevets

(11) Veröffentlichungsnummer: **0 062 330**
**A1**

(12) # EUROPÄISCHE PATENTANMELDUNG

(21) Anmeldenummer: 82102837.0

(22) Anmeldetag: 02.04.82

(51) Int. Cl.³: **G 01 N 27/56**

(30) Priorität: 03.04.81 JP 50399/81
03.04.81 JP 50400/81

(43) Veröffentlichungstag der Anmeldung: **13.10.82**
Patentblatt 82/41

(84) Benannte Vertragsstaaten: **DE FR GB**

(71) Anmelder: **FUJI ELECTRIC CO. LTD.**, 1-1,
**Tanabeshinden, Kawasaki-ku, Kawasaki-shi**
**Kanagawa 210 (JP)**

(72) Erfinder: **Kochiwa, Shinichi, Dipl.-Ing., No. 704, Akiya,**
**Yokosuka-shi, Kanagawa (JP)**
Erfinder: **Kunihara, Kenji, Dipl.-Ing., No. 7-4,**
**Iwato 3-chome, Yokosuka-shi, Kanagawa (JP)**
Erfinder: **Waragai, Shuzo, No. 984-9, Nagai-machi,**
**Yokosuka-shi, Kanagawa (JP)**

(74) Vertreter: **Mehl, Ernst, Dipl.-Ing. et al, Postfach 22 01 76,**
**D-8000 München 22 (DE)**

(54) Sauerstoffempfindlicher Sensor mit einem Sensorelement aus Zirkonoxyd, Verfahren zu dessen Herstellung und Nachbehandlung, Verwendung des Sensors zur Messung in schwefeloxydhaltiger Messgasatmosphäre.

(57) Ein sauerstoffempfindlicher Sensor ist mit einem Sensorelement versehen, welches einen mit Messgas und einen mit Referenzgas beschickten Gasraum voneinander trennt und aus stabilisiertem Zirkonoxyd besteht. Zur Unterstützung der den Messeffekt bildenden elektrochemischen Reaktion und zum Abgriff der dabei entstehenden EMK sind beidseitig poröse Elektroden auf das Sensorelement aufgebracht, die aus Platin und stabilisiertem Zirkonoxyd bestehen, in einem Mischungsverhältnis Pt/ZrO$_2$ zwischen 2 und 10. Zur Herstellung dieser porösen Elektroden wird eine Paste aus Pt-Pulver, ZrO$_2$-Pulver mit einer mittleren Korngrösse von <0,5 μ und einem Bindemittel auf das ZrO$_2$-Sensorelement aufgetragen und bei 1200 bis 1350°C eingebrannt.

Eine Verbesserung der Messeigenschaften des Sensorelements in SOx-haltiger Messgasatmosphäre bei Arbeitstemperaturen unter 800°C wird durch eine Nachbehandlung in einer SO$_2$ bzw. SO$_2$ + SO$_3$ enthaltenden Gasatmosphäre mit einem O$_2$-Anteil von 5 bis 20% erreicht.

Derartige Sensoren werden bevorzugt zur Überwachung von Industrie- oder Haushaltsabgasen bei Gastemperaturen zwischen 500 und 800°C eingesetzt.

0062330

Fuji Electric Co., Ltd.          Unser Zeichen
Kawasaki (Japan)                 VPA 81 P 8570 E

Sauerstoffempfindlicher Sensor mit einem Sensorelement aus Zirkonoxyd, Verfahren zu dessen Herstellung und Nachbehandlung, Verwendung des Sensors zur Messung in schwefeloxydhaltiger Meßgasatmosphäre

Die Erfindung bezieht sich auf einen sauerstoffempfindlichen Sensor mit einem Sensorelement aus Zirkonoxyd, ein Verfahren zu dessen Herstellung und Nachbehandlung und die Verwendung des Sensors zur Messung in schwefeloxydhaltiger Meßgasatmosphäre.

Derartige Sensoren bestehen im wesentlichen aus zwei, durch das wandartige Sensorelement voneinander getrennten Gasräumen, von denen einer mit dem Meßgas, dessen $O_2$-Anteil zu bestimmen ist, der andere mit einem Referenzgas mit bekanntem $O_2$-Gehalt beschickt wird.

Das die Trennwand zwischen den Gasräumen bildende, vorzugsweise rohrförmige Sensorelement ist aus Zirkonoxyd $ZrO_2$, welches mit Calziumoxyd CaO oder Yttriumoxyd $Y_2O_3$ stabilisiert ist.
An einander gegenüberliegenden Stellen der Oberflächen des Sensorelementes befinden sich poröse Elektroden aus Edelmetall, beispielsweise Platin, um die dem Sauerstoff-Partialdruckunterschied von Meß- und Referenzgas entsprechende elektromotorische Kraft EMK abzugreifen und die zur ihrer Erzeugung notwendige elektrochemische Reaktion zu unterstützen.

Die Porosität der Elektroden ist von wesentlicher Bedeutung, da die elektrochemische Reaktion nur an den Oberflächen in dem Dreiphasensystem von Gas, Elektrodenmaterial und stabilisiertem Zirkonoxyd stattfindet.

Sp 4 Scl / 30.03.1982

0062330

Der Elektrodenwerkstoff wird aufgedampft, aufgesprüht oder vorzugsweise im Siebdruckverfahren unter Verwendung einer platinhaltigen Paste aufgebracht und bei Temperaturen über 1000 $^{O}$C eingebrannt.

Derartig hohe Einbrenntemperaturen sind notwendig, um eine ausreichende mechanische Haftung zwischen dem Elektrodenmaterial und der Zirkonoxydoberfläche des Sensorelements herzustellen.
Andererseits kann bei hohen Einbrenntemperaturen eine Sinterung und Rekristalisation der Platinpartikel eintreten, wodurch die Porosität verringert wird.

Da die Verbindung zwischen dem metallischen Platin der Elektrode und der Oberfläche des Zirkonoxydelements eine rein mechanische ist, verschlechtert sich die Haftung bei längerer Betriebsdauer, der Übergangswiderstand zwischen Zirkonoxydoberfläche des Sensorelements und der Elektrode steigt an, die Empfindlichkeit des Sensors wird mit der Zeit geringer.

Sauerstoffempfindliche Sensoren auf Zirkonoxydbasis werden vornehmlich in Meßeinrichtungen zur Bestimmung des Sauerstoffanteils in industriellen Gasgemischen, insbesondere in Industrieabgasen, bei Gastemperaturen zwischen 800 und 900 $^{O}$C eingesetzt.

Es besteht jedoch die Forderung, diese Sensoren auch bei geringeren Abgastemperaturen verwenden zu können, wie sie z. B. bei kleineren Feuerungsanlagen in öffentlichen Gebäuden oder in Haushalten auftreten.
Bei relativ niedrigen Arbeitstemperaturen ist die elektrochemische Umsetzung in dem Sensor jedoch wesentlich geringer als bei höheren Temperaturen, die Empfindlichkeit wird verringert.

Während Schwefeloxyde, wie sie in den meisten Abgasen vorkommen, die Messung bei Arbeitstemperaturen über 800 $^{O}$C

0062330

nicht wesentlich beeinflussen, wird der Meßfehler, der auf die Querempfindlichkeit gegen Schwefeloxyde zurückzuführen ist, bei Arbeitstemperaturen unter 800 $^O$C erheblich größer.

Es besteht demgemäß die Aufgabe, einen sauerstoffempfindlichen Sensor auf Zirkonoxydbasis zu schaffen, der sich mit hoher Empfindlichkeit und mechanischer und elektrischer Langzeitstabilität bei Arbeitstemperaturen unter 800 $^O$C betreiben läßt und dabei unempfindlich gegen die Einflüsse anderer Komponenten des Meßgases, insbesondere von Schwefeloxyden ist.

Die gestellte Aufgabe ist mit einem Sensor lösbar, der die im Anspruch 1 angegebenen Eigenschaften besitzt.

Dadurch, daß in dem Elektrodenwerkstoff stabilisiertes $ZrO_2$ von der gleichen Zusammensetzung wie das des Sensorelements vorhanden ist, wird die Haftung zwischen Elektrode und Sensoroberfläche verbessert.
Durch die Zugabe von stabilisiertem Zirkonoxyd, das eine hohe thermische Stabilität aufweist, wird das Zusammensintern oder die Rekristallisation des Platins beim Einbrennen verhindert, die erforderliche Porosität bleibt erhalten.
Die in dem Dreiphasensystem Gas - Platin - $ZrO_2$ gebildeten wirksamen Flächen werden infolge des Gehalts an stabilisierten $ZrO_2$ im Elektrodenwerkstoff erheblich vergrößert, was zu einer Erhöhung der Empfindlichkeit und Ansprechgeschwindigkeit der den Meßeffekt verursachenden elektrochemischen Reaktion bei Arbeitstemperaturen unter 800 $^O$C führt.

Ein derartiger Sensor mit Gemischelektroden läßt sich nach dem erfindungsgemäßen Verfahren nach Anspruch 2 herstellen.

0062330

Das erfindungsgemäße Verfahren wird anhand von nachfolgend beschriebenen Versuchen und den Diagrammen in den Figuren 1 bis 7 erläutert.

Figur 1 zeigt die Beziehung zwischen der Korngröße des $ZrO_2$-Pulvers im Elektrodenwerkstoff und der Haftung der Elektrode an ihrem Substrat;

Figur 2 zeigt in einem Diagramm den Einfluß verschiedener Korngrößen des $ZrO_2$-Pulvers auf die Eigenschaften der Gemischelektrode;

Figur 3 zeigt in einem Diagramm den Einfluß des Mischungsverhältnisses $Pt/ZrO_2$ auf die Betriebseigenschaften des Sensors bei niedrigen Temperaturen;

Figur 4 zeigt in einem Diagramm den Einfluß der Einbrenntemperatur auf die Betriebseigenschaften bei niedrigen Temperaturen;

Figur 5 zeigt in einem Diagramm das Langzeitverhalten eines Sensorelements hinsichtlich Elektrodenwiderstand und Ansprechgeschwindigkeit;

Figur 6 zeigt in einem Diagramm den Störeinfluß von Schwefeldioxyd $SO_2$ bei einem Sensorelement mit Gemischelektrode und einem Sensorelement mit Platinelektrode;

Figur 7 zeigt den Einfluß von Nachbehandlungsdauer und Gasatmosphärenzusammensetzung auf das relative Meßsignal eines Sensors.

Versuch I:

Aus pulverisiertem, mit Yttriumoxyd (8 mol % $Y_2O_3$) stabilisiertem Zirkonoxyd $ZrO_2$ mit mittleren Korngrößen zwischen 0,05 $\mu$ und 10 $\mu$ und pulverisiertem Platin der mittleren Korngröße 0,05 $\mu$ wurden mehrere Mischungen mit dem Volumenverhältnis $Pt/ZrO_2 = 3$ hergestellt und mit einem gelösten Kunstharz zu Pasten mit einer Viskosität von etwa 300 Poise verarbeitet.

Die Pasten wurden in dünner Schicht auf die Innen- und Außenflächen der Endabschnitte von an diesen Enden geschlossenen Rohren (Teströhren) aus wie oben stabilisier-

0062330

tem Zirkonoxyd aufgetragen und bei Temperaturen zwischen 1000 und 1500 $^\circ$C eingebrannt.

Zur Überprüfung der mechanischen Haftung zwischen Elektrodenschicht und Zirkonoxyd-Sensorelement, kurz Element genannt, wurden die Elektroden der verschiedenen Proben mit Klebeband umwickelt und dieses abgezogen.

Trennte sich beim Abziehen des Klebebandes die Elektrode von dem Element, so ließ dies auf eine unzureichende mechanische Haftung schließen.

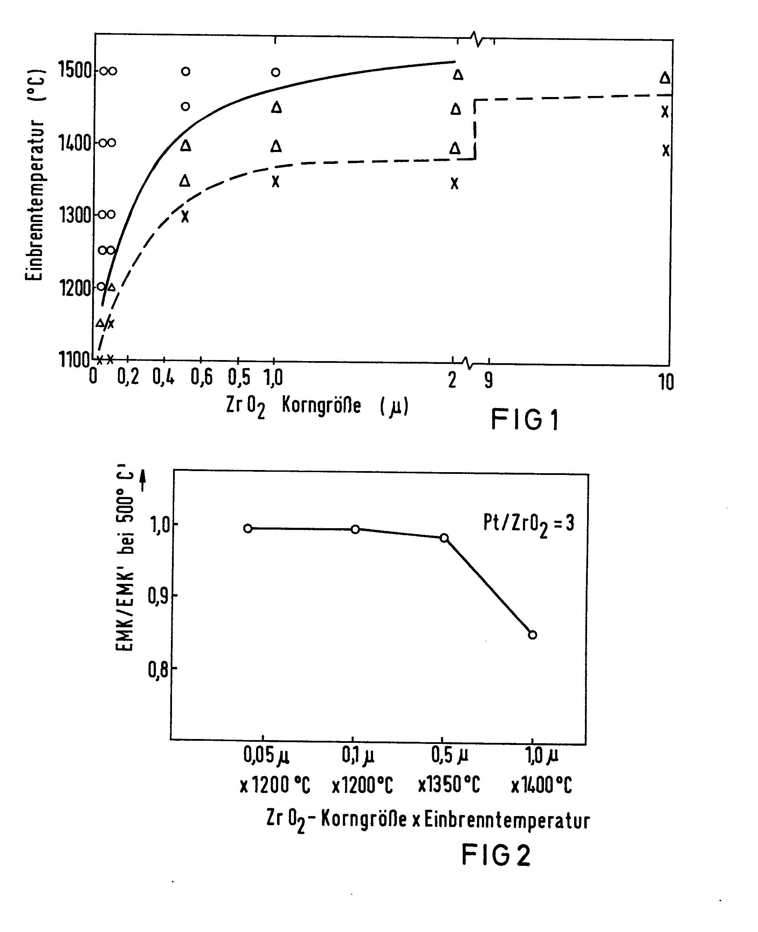

Diese Fälle sind in dem Diagramm nach Figur 1 mit der Einbrenntemperatur als Ordinate und der mittleren Korngröße des Zirkonoxydpulvers in der Pt/ZrO$_2$-Mischung als Abszisse mit dem Zeichen x eingetragen.

Ließ sich die eingebrannte Elektrodenschicht nicht auf die dargestellte Weise abtrennen, wurde durch Kratzen mit einem scharfen Gegenstand (Pinzette) versucht, ob die Elektrodenschicht leicht zu entfernen ist, was auf ausreichende Haftung bei guter Porosität schließen läßt (Zeichen $\Delta$ ).

War die Elektrodenschicht nur schwer entfernbar (Zeichen o), konnte auf bereits eingetretene, unerwünschte Sinterung geschlossen werden.

Wie die in dem Diagramm nach Figur 1 dargestellten Versuchsergebnisse zeigen, lassen sich in dem von der ausgezogenen und der gestrichelten Kurve eingeschlossenen Bereich hinsichtlich der mechanischen Haftung zwischen Elektrode und Element brauchbare Ergebnisse erzielen.

Es ist auch zu erkennen, daß mit steigender Korngröße die Einbrenntemperatur erhöht werden muß.

Die Elektroden wurden dann mit Anschlußdrähten aus Platin versehen, das Innere der Teströhre mit Luft gefüllt, die Außenseite der Teströhre einer Gasmischung aus Stickstoff und 1 % Sauerstoff ausgesetzt und die zwischen den inneren und äußeren Elektroden auftretende elektromotorische Kraft EMK bei Arbeitstemperaturen von 500 bis 800 $^\circ$C gemessen.

0062330

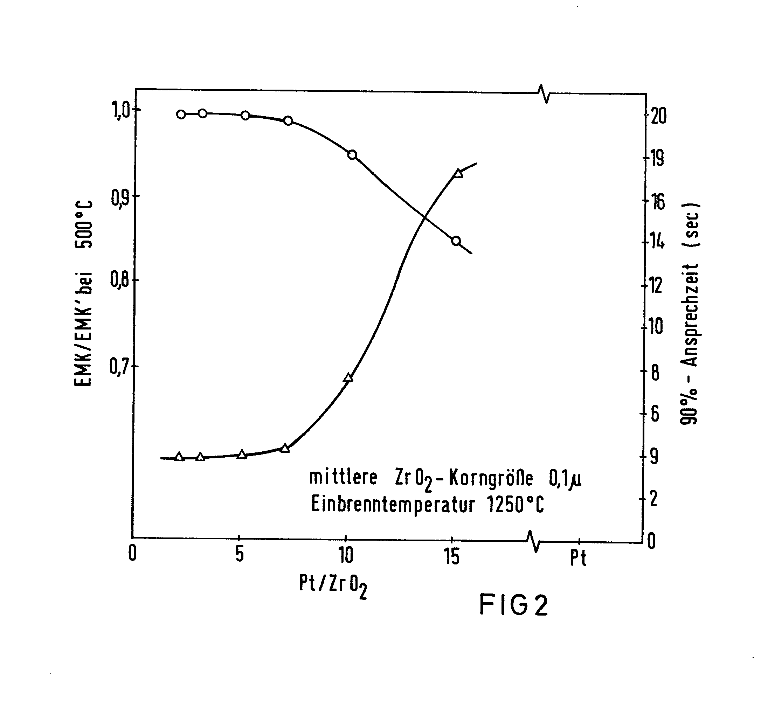

In dem Diagramm in Figur 2 ist über der mittleren Korngröße und der Einbrenntemperatur als Abszisse das dem Verhältnis von gemessenem EMK-Wert zu theoretisch errechnetem Wert EMK' bei 500 $^O$C Arbeitstemperatur entsprechende relative Meßsignal aufgetragen.

Man erkennt daraus, daß die mittlere Korngröße des $ZrO_2$-Pulvers der Elektrodenmischung 1 $\mu$ möglichst nicht überschreiten soll, die besten Resultate wurden bei mittleren Korngrößen von 0,5 $\mu$ und kleiner erzielt.

Versuch II:

Um den Einfluß des Mischungsverhältnisses auf die elektrischen Eigenschaften der Elektrode zu untersuchen, wurden mehrere $Pt/ZrO_2$-Gemische mit unterschiedlichem Volumenverhältnis unter Verwendung eines $ZrO_2$-Pulvers der mittleren Korngröße 0,1 $\mu$ angesetzt und bei 1250 $^O$C eingebrannt. Dann wurde der elektrische Widerstand zwischen den etwa 10 mm voneinander entfernten Kanten einer streifenförmigen Elektrode gemessen.

Die Meßwerte sind in der folgenden Tabelle dargestellt. Zum Vergleich wurde eine Widerstandsmessung an einer Elektrode aus reinem Platin durchgeführt.

| $Pt/ZrO_2$ Volumen-verhältnis | 15 | 10 | 7 | 5 | 3 | 2 | 1 | 0,5 | reines Platin |
|---|---|---|---|---|---|---|---|---|---|
| Elektrischer Widerstand | 0.2 | 0.2 | 0.2 | 0.2 | 0.2 | 5...10 | $>10^5$ | $>10^5$ | 0.2 |

Wie sich aus der Tabelle erkennen läßt, verursacht ein zu hoher Zirkonoxydanteil in dem Gemisch eine teilweise Unterbrechung der leitenden Verbindung zwischen dem Platinteilchen, wodurch sich der Widerstand stark erhöht. Deswegen sollte ein Volumenverhältnis $Pt/ZrO_2$ gewählt werden, das mindestens größer als 2, besser größer als 3 ist. Aus wirtschaftlichen Erwägungen wird ein oberer Verhältniswert von 7 als ausreichend angesehen.

0062330

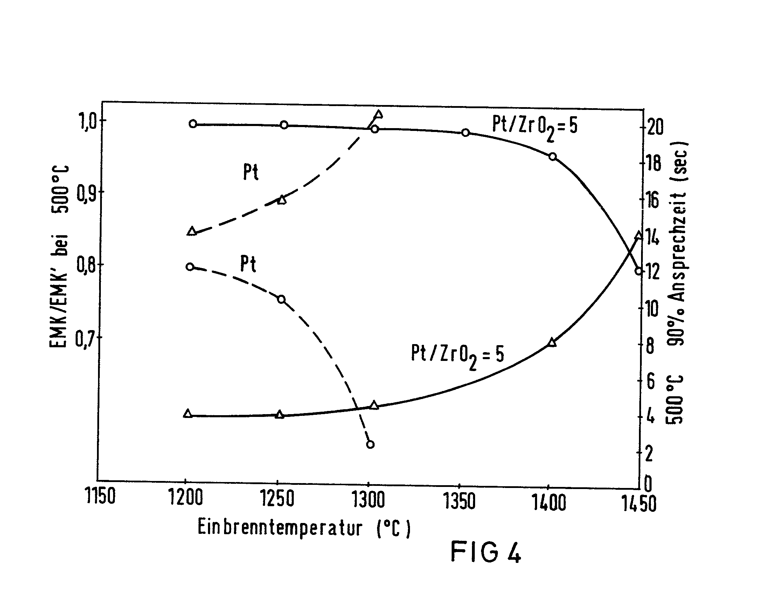

Das Diagramm in Figur 3 zeigt den Einfluß der Pt/ZrO$_2$-Gemischzusammensetzung auf die elektrischen Eigenschaften des Sensorelements bei niedriger Arbeitstemperatur, hier 500 $^O$C.

Auf der Abszisse ist das Pt/ZrO$_2$-Volumenverhältnis von bei 1250 $^O$C eingebrannten Gemischen mit einer mittleren ZrO$_2$-Korngröße von 0,1 /u aufgetragen, auf der linken Ordinate das relative Meßsignal EMK/EMK′ und auf der rechten Ordinate die 90 %-Ansprechzeit in Sekunden, d. h. die Zeit, die benötigt wird, um 90 % des jeweiligen Meßwertes zu erreichen.

Man erkennt, daß sowohl das relative Meßsignal EMK/EMK′ (mit o markierte Kurve) wie auch die Ansprechgeschwindigkeit (mit △ markierte Kurve) bei niedriger Arbeitstemperatur (500 $^O$C) in erheblichem Maße von dem Volumenverhältnis des Pt/ZrO$_2$-Gemischs abhängt, insbesondere, wenn dieses Verhältnis gegen 10 und darüber geht. Aus dem Diagramm ist auch zu entnehmen, daß das Volumenverhältnis zwischen 2 und 10, vorzugsweise jedoch zwischen 3 und 7 liegen soll.

Versuch III:
Es wurden Untersuchungen zur Ermittlung der optimalen Einbrenntemperatur für die Gemischelektrode angestellt, deren Ergebnisse in dem Diagramm der Figur 4 gezeigt sind. Unter Verwendung von pulverisiertem und stabilisertem Zirkonoxyd mit der mittleren Korngröße von 0,1 /u wurde eine Paste mit einem Pt/ZrO$_2$-Verhältnis von 5 hergestellt, auf verschiedene Sensorelemente aufgetragen und bei Einbrenntemperaturen zwischen 1200 und 1450 $^O$C eingebrannt. Bei einer Arbeitstemperatur von 500 $^O$C wurde dann die relative Ausgangsgröße EMK/EMK′ (mit o markierte Kurve) und die 90 %-Ansprechzeit gemessen (mit △ markierte Kurve). Zum Vergleich wurden die entsprechenden, gestrichelt gezeichneten Kurven für Elektroden aus reinem Platin aufgenommen.

Wie aus dem Diagramm in Figur 4 ohne weiteres zu erkennen ist, sind die Gemischelektroden aus der $Pt/ZrO_2$-Mischung denen aus reinem Platin weit überlegen. Bei Einbrenntemperaturen über 1350 $^O$C läßt sich bereits der durch teilweise Sinterung hervorgerufene Effekt erkennen, der zu einer Verschlechterung der Meßeigenschaften führt. Die besten Ergebnisse sind bei Einbrenntemperaturen zwischen 1200 und 1350 $^O$C, höchstens 1400 $^O$C zu erzielen.

Versuch IV:

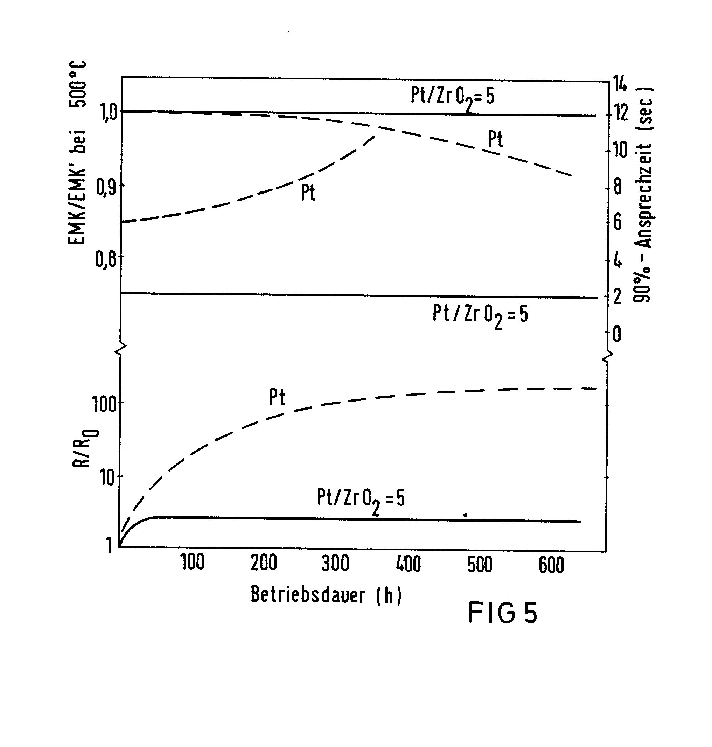

In den Diagrammen der Figur 5 sind die Ergebnisse von Untersuchungen über das Langzeitverhalten eines Sensorelements mit der erfindungsgemäßen, bei 1250 $^O$C eingebrannten Gemischelektrode und eines Sensorelements mit reiner Pt-Elektrode bezüglich Meßsignal, Ansprechzeit und Widerstand dargestellt, Abzisse ist die Betriebsdauer in Stunden, Ordinaten sind das relative Meßsignal EMK/EMK', die 90 %-Ansprechzeit und das Verhältnis des gemessenen, von der Betriebsdauer abhängigen Widerstandswerts R zu dem Anfangswert $R_0$.

Es wurden wieder ein $N_2/O_2$-Gasgemisch mit 1 % $O_2$ als Meßgas und Luft als Referenzgas bei einer Arbeitstemperatur von 500 $^O$C eingesetzt.

Die Vorteile der Elektrode aus dem $Pt/ZrO_2$-Gemisch sind deutlich erkennbar. Relatives Meßsignal und Ansprechzeit ändern sich während der Versuchsdauer praktisch nicht. Während sich der Widerstand der Pt-Elektrode bei einer Betriebsdauer von einigen hundert Stunden um zwei dezimale Größenordnungen ändert, steigt der Widerstand bei der Gemischelektrode innerhalb der ersten 50 Stunden um etwa das Dreifache über den Anfangswert an, bleibt dann aber im wesentlichen konstant.

Wie bereits eingangs erwähnt, ergeben sich bei Zirkonoxydsensoren mit Pt-Elektroden erhebliche Probleme, wenn das Meßgas Schwefeloxyde (SOx) enthält und bei Arbeitstempe-

0062330

raturen unter 800 $^{\circ}$C gemessen werden soll.
Bei einem

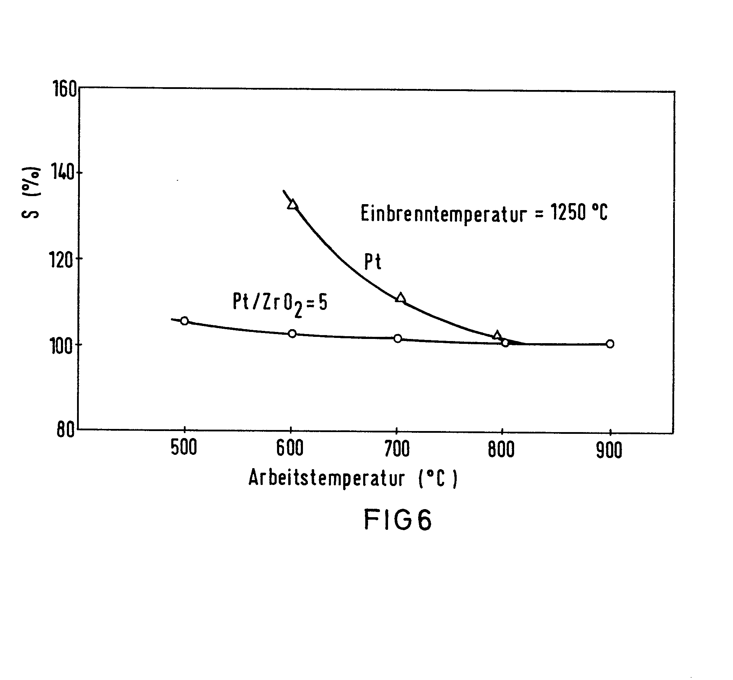

Versuch V,
dessen Ergebnisse in dem Diagramm der Figur 6 dargestellt sind, wurde jeweils ein Sensorelement mit Pt-Elektrode und ein Sensorelement mit einer bei 1250 $^{\circ}$C eingebrannten Mischelektrode des Volumenverhältnisses Pt/ZrO$_2$ = 5 abwechselnd einer Meßgasatmosphäre aus Stickstoff mit 1 % Sauerstoff und 3 % Wasser und einer anderen Meßgasatmosphäre aus Stickstoff mit 1 % Sauerstoff, 3 % Wasser und 1000 ppm SO$_2$ ausgesetzt.
Aus den gemessenen Werten wurde das Störverhältnis S berechnet nach der Beziehung

$$S = \frac{\text{Meßsignal bei } SO_2\text{-freiem Meßgas}}{\text{Meßsignal bei } SO_2\text{-haltigem Meßgas}} \cdot 100 \text{ \%}$$

Das Störverhältnis S ist als Ordinate in dem Diagramm der Figur 6 aufgetragen, die Abszisse ist die Arbeitstemperatur.

Es läßt sich ohne weiteres erkennen, daß bei dem Sensorelement mit Pt-Elektroden bei Arbeitstemperaturen unter 800 $^{\circ}$C eine immer stärkere Meßwertverfälschung auftritt, wohingegen der Meßfehler bei der Pt/ZrO$_2$-Elektrode erst bei einer Arbeitstemperatur unter 600 $^{\circ}$C leicht ansteigt.

Eine Verbesserung der Betriebseigenschaften der Sensoren für den Einsatz in Schwefeloxyde enthaltenden Meßgasen bei niedrigen Arbeitstemperaturen im Bereich 500 bis 600 $^{\circ}$C läßt sich noch durch eine Nachbehandlung der später dem Meßgas ausgesetzten äußeren Elektrode in einer SO$_2$ oder SO$_2$ + SO$_3$ sowie Sauerstoff enthaltenden Atmosphäre erreichen, sofern dies bei Sensoren mit Gemisch-Elektroden überhaupt notwendig erscheint.

0062330

Die Nachbehandlung wurde versuchsweise in Gasatmosphären durchgeführt, die 1000 ppm $SO_2$ bzw. 500 ppm $SO_2$ + 500 ppm $SO_3$ und zwischen 5 und 20 % $O_2$ enthielten, die Meßgasseite der Sensorelemente wurde über Zeiträume bis zu mehreren hundert Stunden bei einer Temperatur zwischen 600 und 800 $^O$C diesen Atmosphären ausgesetzt.

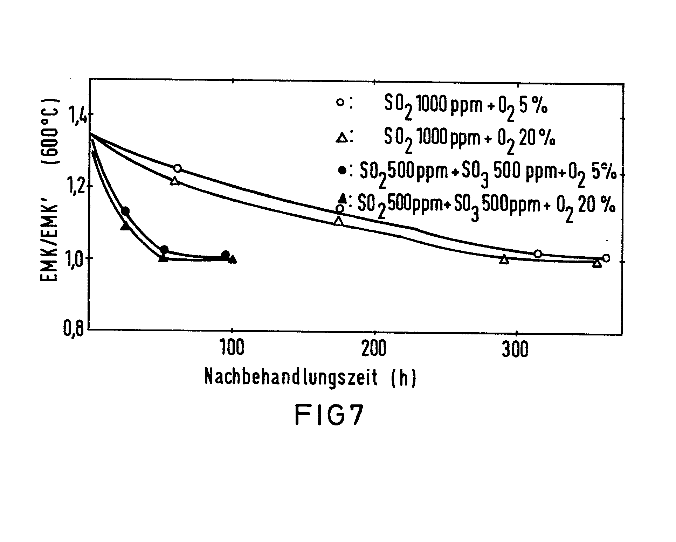

Es hat sich bei den Versuchen gezeigt, daß insbesondere auch bei Sensorelementen auf Zirkonoxydbasis, die mit herkömmlichen Elektroden aus porösem Platin versehen waren, durch eine derartige Nachbehandlung eine erhebliche Minderung des Störeffekts bei der Messung in SOx-haltigen Gasen bei niedrigen Temperaturen erreichbar ist, wie es sich in besonders augenfälliger Weise aus dem Diagramm der Figur 7 entnehmen läßt.

Das beschriebene Verfahren zur Nachbehandlung läßt sich nicht nur im Anschluß an die Herstellung der Sensoren, sondern auch an am vorgesehenen Meßort, z. B. in einem Schornstein, eingebauten Sensoren vornehmen, wenn das Abgas $SO_2$ bzw. $SO_2$ und $SO_3$ sowie Sauerstoff enthält.
Dies ist bei Feuerungsanlagen mit fossilen Brennstoffen nahezu immer der Fall; beispielsweise lassen sich im Abgas eines Ölbrenners, dessen Brennstoff 3 % Schwefel enthält und der bei einem Luft-Brennstoffverhältnis von 1 : 2 betrieben wird, etwa 1000 ppm $SO_2$ und etwa 50 ppm $SO_3$ nachweisen. Wird dem Abgas noch Luft zugefügt, so daß ein Sauerstoffgehalt gegen 20 % erreicht wird, kann die Nachbehandlung am Meßort innerhalb von einigen zehn Stunden abgeschlossen sein, der Sensor kann für Messungen bei Arbeitstemperaturen unter 800 $^O$C in schwefeloxydhaltigen Meßgasen ohne Beeinträchtigung der Meßgenauigkeit und Ansprechgeschwindigkeit eingesetzt werden.

7 Patentansprüche
7 Figuren

0062330

Patentansprüche

1. Sauerstoffempfindlicher Sensor mit einem zwei mit Meßgas bzw. Referenzgas beschickte Räume voneinander trennenden
Sensorelement aus stabilisiertem Zirkonoxyd ($ZrO_2$) mit
porösen Edelmetall-Elektroden zum Abgriff einer der Differenz der Sauerstoffkonzentrationen der Gase in den Gasräumen entsprechenden EMK, d a d u r c h  g e k e n n -
z e i c h n e t ,   daß die porösen Elektroden aus einem
Gemisch von Platin (Pt) und stabilisiertem Zirkonoxyd
($ZrO_2$) in einem Volumenverhältnis $Pt/ZrO_2$ zwischen 2 und 10,
vorzugsweise zwischen 3 und 7 bestehen.

2. Verfahren zur Herstellung von Sensorelementen für Sensoren nach Anspruch 1, g e k e n n z e i c h n e t
d u r c h   folgende Schritte:
eine Mischung aus pulverisiertem Platin (Pt) und pulverisiertem, stabilisiertem Zirkonoxyd ($ZrO_2$) mit einer mittleren Korngröße < 1 $\mu$ wird in einem Volumenverhältnis
$Pt/ZrO_2$ von 2 bis 10, vorzugsweise 3 bis 7, hergestellt,
mit einem Bindemittel zu einer Paste verarbeitet,
an den für die Elektroden vorgesehenen Stellen des vorzugsweise rohrförmigen Sensorelements aufgebracht
und bei einer Einbrenntemperatur zwischen 1100 und 1400 $^\circ$C
eingebrannt.

3. Verfahren nach Anspruch 2, d a d u r c h  g e k e n n -
z e i c h n e t ,   daß die mittlere Korngröße des $ZrO_2$-
Pulvers < 0,5 $\mu$ ist.

4. Verfahren nach Anspruch 2, d a d u r c h  g e k e n n -
z e i c h n e t ,   daß die Einbrenntemperatur zwischen
1200 und 1350 $^\circ$C liegt.

5. Verfahren zur Nachbehandlung von Sensorelementen mit
porösen Pt- oder $Pt/ZrO_2$-Elektroden nach Anspruch 1,
d a d u r c h  g e k e n n z e i c h n e t ,   daß die

Meßgasseite des Sensorelements während einer Zeitspanne bis zu einigen hunder Stunden in einer Gasatmosphäre, die 200 bis 5000 ppm $SO_2$ oder $SO_2$ + $SO_3$ und 1 bis 20 % Sauerstoff enthält, einer Temperatur zwischen 550 und 850 $^oC$ ausgesetzt ist.

6. Verfahren nach Anspruch 5, d a d u r c h  g e - k e n n z e i c h n e t , daß eine Gasatmosphäre mit gleichen Anteilen $SO_2$ und $SO_3$ und 20 % Sauerstoff verwendet wird.

7. Verwendung der Sensoren nach Anspruch 1 oder 4 zur Messung des Sauerstoffanteils in einem Schwefeloxyde enthaltenden Meßgas bei einer Arbeitstemperatur unter 800 $^oC$.

FIG 1

FIG 2

mittlere ZrO_2-Korngröße 0,1μ
Einbrenntemperatur 1250°C

FIG 2

FIG 4

FIG 5

FIG 6

0062330

81 P 8570

FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 619 746 (R. BOSCH) <br> * Seite 7, Zeilen 14-39; Seite 8, Zeilen 1-25 * | 1,2 | G 01 N 27/56 |
| | --- | | |
| Y | DE-A-2 836 900 (TOYOTA JIDOSHA KOGYO K.K.) <br> * Seiten 10-12 * | 1,4 | |
| | --- | | |
| A | DE-A-2 913 633 (R. BOSCH) <br> * Anspruche * | 1 | |
| | --- | | |
| A | DE-A-2 911 042 (R. BOSCH) <br> * Anspruche; Zusammenfassung * | 1 | |
| | --- | | |
| A | DE-A-2 831 478 (R. BOSCH) <br> * Anspruche; Seite 4; Vorteile der Erfindung - Seite 5 * | 1 | |
| | --- | | RECHERCHIERTE SACHGEBIETE (Int. Cl. 3) |
| A | FR-A-2 457 489 (NISSAN MOTOR) <br> * Anspruche * | 1 | G 01 N 27/56 |
| | --- | | |
| A | US-A-4 138 881 (A.O. ISENBERG) <br> * Spalte 2, Zeilen 15-57; Anspruche * | 1 | |
| | --- | | |
| A | US-A-4 151 060 (A.O. ISENBERG) <br> * Spalte 1, Zeilen 1-25; Anspruche * | 1,7 | |
| | ----- | | |

Der vorliegende Recherchenbericht wurde für alle Patentansprüche erstellt.

| Recherchenort <br> DEN HAAG | Abschlußdatum der Recherche <br> 02-07-1982 | Prüfer <br> CALLEWAERT-HAEZEBROU |
|---|---|---|